# EUROPÄISCHE PATENTSCHRIFT

(11) **EP 1 353 490 B1**
(45) Veröffentlichungstag und Bekanntmachung des Hinweises auf die Patenterteilung: **12.08.2009**
(21) Anmeldenummer: 03005879.6
(22) Anmeldetag: 15.03.2003
(51) Int. Cl.: H04M 11/02, H04M 1/02, H02G 3/16

(54) **Wohnungsstation für eine Tür-Kommunikationsanlage**
Housing station for a door phone apparatus
Poste de logement pour dispositif d'interphone

(30) Priorität: 11.04.2002 DE 10216093
(43) Veröffentlichungstag der Anmeldung: 15.10.2003
(73) Patentinhaber: Ritto GmbH & Co.KG, 35708 Haiger (DE)
(72) Erfinder: Heppner, Manfred, 35708 Haiger (DE); Neumann, Udo, 58579 Schalksmühle (DE)
(74) Vertreter: Fleck, Hermann-Josef

(56) Entgegenhaltungen:
- EP-A- 0 505 913
- EP-A- 0 849 949
- EP-A- 1 320 244
- DE-A- 4 134 044
- DE-A- 4 341 099
- DE-C- 4 009 190

## Beschreibung

Die Erfindung betrifft eine Wohnungsstation für eine Tür-Kommunikationsanlage mit einem UP-Gehäuse, in das Funktionseinheiten eingesetzt und mittels eines Rahmens mit Abdeckungen abgedeckt sind.

Derartige Wohnungsstationen sind vielfach in AP-Technik (Aufputztechnik) ausgebildet, werden aber immer mehr auch in UP-Technik (Unterputztechnik) gefordert. Für den Einsatz in UP-Technik sind spezielle UP-Gehäuse erforderlich, obwohl in der Installationstechnik bereits erweiterbare Gehäuseteile handelsüblich sind, die als Massenerzeugnisse preisgünstig angeboten werden.

Es ist Aufgabe der Erfindung, eine Wohnungsstation für eine Tür-Kommunikationsanlage zu schaffen, die wie in der Installationstechnik in UP-Technik ausgeführt und erweitert werden kann.

Diese Aufgabe wird nach der Erfindung mit den Merkmalen des Anspruches 1 gelöst.

Bei diesem Aufbau der Wohnungsstation können beispielsweise die handelsüblichen UP-Dosen der Installationstechnik verwendet, die in vorgegebenem Raster aneinanderreihbar sind und auf die Ausnehmungen der verwendeten, handelsüblichen Rahmen abgestimmt sind. Es sind daher nur die Module und die Abdeckungen für die Tür-Kommunikationsanlage entsprechend auszulegen. Dabei kann die Wohnungsstation in ihrem Grundausbau für Sprechverkehr zwei UP-Dosen und den Doppelrahmen umfassen. Die UP-Dosen nehmen ein Steuerungsmodul und ein Verstärkermodul auf. Dem Steuerungsmodul ist eine Abdeckung im Rahmen zugeordnet, die mit den Bedienungs- und/oder Anzeigeelementen versehen ist. Dem Verstärkermodul ist im Rahmen eine Abdeckung zugeordnet, die mit Lautsprecher und/oder Mikrophon für das als Sprech- und Hörverstärker verwendete Verstärkermodul versehen ist. Das Steuerungsmodul weist einen Rechner, einen Steuerbefehl-Sender und -Empfänger und gegebenenfalls auch einen Speicher auf. Er kann auch mit den Elementen der Abdeckung zusammenarbeiten.

Soll die Tür-Kommunikationsanlage auch eine Videoübertragung ermöglichen, dann ist nach einer Weiterbildung der Wohnungsstation vorgesehen, dass das UP-Gehäuse auf drei UP-Dosen erweitert ist, dass in die dritte UP-Dose ein Videosteuermodul eingesetzt ist, dass der Rahmen ein handelsüblicher Dreifachrahmen ist und dass die dem Videosteuermodul zugeordnete Ausnehmung mittels einer Abdeckung mit Bildschirm abgedeckt ist. Das dafür erforderliche UP-Gehäuse ist aus den handelsüblichen UP-Dosen leicht zusammenbaubar und der benötigte Dreifachrahmen steht aus der Installationstechnik ebenfalls zur Verfügung.

Die Verdrahtung der Module ist nach einer Ausgestaltung so gelöst, dass das Steuerungsmodul, das Verstärkermodul und das Videosteuermodul mittels Verbindungsleitungen elektrisch miteinander verbunden sind. Die Verbindungsleitungen können über die Anreihelemente der UP-Dosen geführt werden, wobei insbesondere vorgesehen ist, dass die UP-Dosen topfartig ausgebildet und mittels angeformter Steckhülsen aneinanderreihbar sind. Die Steckhülsen sind dazu in bekannter Weise im Bereich der Dosenwandung zu öffnen, wie in der Installationstechnik bereits vorgenommen wird. Dabei ist kann es ausreichen, wenn die UP-Dose zwei diagonal angeformte komplementäre, ineinander steckbare Steckhülsen aufweist.

Die Komplettisierung der Moduleinheiten wird nach einer Ausgestaltung so vorgenommen, dass das Steuerungsmodul, das Verstärkermodul und das Video-steuermodul jeweils aus einem dosenförmigen Gehäuseunterteil, einem das Gehäuseunterteil abdeckenden Gehäuseoberteil und einer das zusammengesetzte Steuerungsmodul, das Verstärkermodul oder das Videosteuermodul tragenden Trägerplatte besteht. Die so aufgebauten Moduleinheiten können dann in die UP-Dosen eingesetzt werden. Die unterschiedlichen Funktionen der Moduleinheiten werden dadurch realisiert, dass das Gehäuseunterteil eine Leiterplatte mit zum zugeordneten Modul verbundenen Bauelementen eingesetzt ist und dass die Leiterplatte mit einer Modul-Schnittstelle versehen ist, die über das Gehäuseoberteil und die Tragplatte hindurch mit der im Rahmen eingesetzten Abdeckung verbunden ist.

Zur Erleichterung der Verdrahtung ist dabei vorgesehen, dass das Gehäuseunterteil im Boden mit einem Durchbruch zur Einführung der Verbindungsleitungen versehen ist und dass das Gehäuseoberteil mit einem Durchbruch versehen ist, durch den die die Modul-Schnittstelle mit der zugeordneten Abdeckung im Doppel- oder Dreifachrahmen verbindenden Leitungen geführt sind.

Ist nach einer Weiterbildung vorgesehen, dass sie mit zusätzlichen UP-Dosen und entsprechend erweitertem Rahmen erweiterbar ist, wobei zumindest die weiteren Ausnehmungen des Rahmens mittels angepasster Abdeckungen verschlossen sind, dann kann die Wohnungsstation auch leicht erweitert werden, wenn dies bei einer Erweiterung der Tür-Kommunikationsanlage oder der Integration neuer Funktionen in die Tür-Kommunikationsanlage erforderlich wird.

Die Erfindung wird anhand eines in den Zeichnungen dargestellten Ausführungsbeispiels näher erläutert. Es zeigen:
- Fig. 1: schematisch den Aufbau einer Wohnungsstation für eine mit Sprechverkehr und Videoübertragung ausgerüstete Tür-Kommunikationsanlage und
- Fig. 2: schematisch den Aufbau einer Moduleinheit für die Wohnungsstation nach Fig. 1.

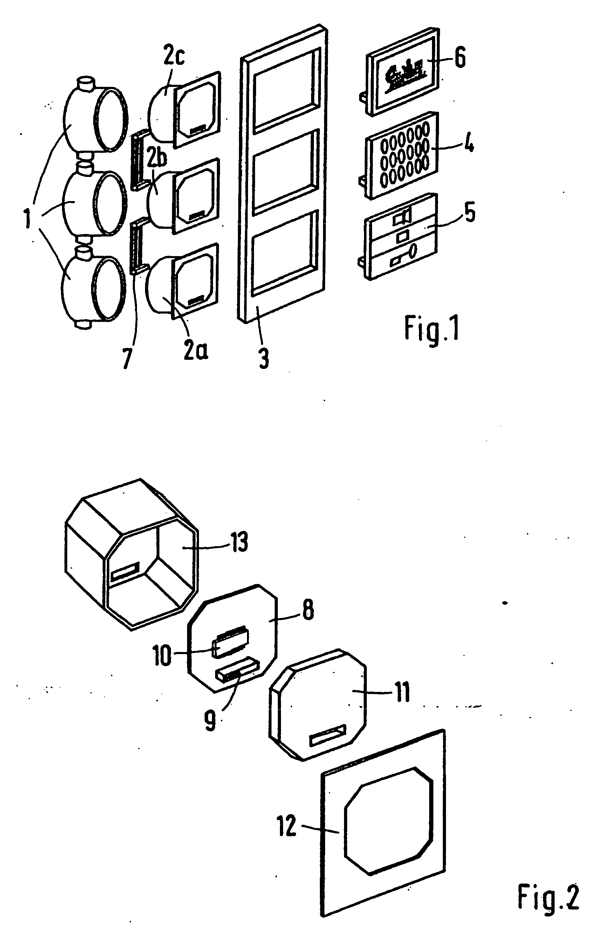

Die Wohnungsstation nach Fig. 1 umfasst ein aus drei handelsüblichen UP-Dosen 1 aneinander gereihtes UP-Gehäuse. Die UP-Dosen 1 sind topfartig und diametral mit angeformten Steckhülsen versehen, die ineinandersteckbar sind und das Raster der Dosenaufnahmen festlegen und auf die Verteilung der Ausnehmungen in dem Dreifachrahmen 3 abgestimmt sind. Derartige Dreifachrahmen 3 sind ebenfalls in der Installationstechnik handelsüblich.

In die erste UP-Dose 1 wird ein Steuerungsmodul 2c eingesetzt, das in der zugeordneten Ausnehmung des Dreifachrahmens 3 mittels einer Abdeckung 5 mit Bedienungs- und/oder Anzeigeelemente abgedeckt wird. Das Steuerungsmodul 2a umfasst die erforderlichen Funktionseinheiten, wie Speicher, Rechner, Steuerbefehlsender und/oder -Empfänger und dgl.

In die zweite UP-Dose 1 wird ein Verstärkermodul 2b eingesetzt, das als Sprechund Hörverstärker für den Sprechverkehr verwendet wird. Die zugeordnete Abdeckung 4 weist einen Lautsprecher und/oder ein Mikrophon auf.

Für die Videoübertragung wird in die dritte UP-Dose 1 ein Videosteuermodul 2c eingesetzt und im Dreifachrahmen 3 deckt eine Abdeckung 6 mit Bildschirm das Videosteuermodul 2c ab.

Die Verdrahtung der Moduleinheiten übernehmen Verbindungsleitungen 7, die auch als Vielfachleitungen ausgelegt sein können. Diese Verbindungsleitungen 7 können in bekannter Weise über die Steckhülsen der UP-Dosen 1 geführt werden.

Fehlt in der Tür-Kommunikationsanlage die Videoübertragung, dann genügen für den Grundaufbau der Wohnungsstation zwei UP-Dosen 1 und ein Doppelrahmen 3. Das Steuerungsmodul 2a und das Verstärkermodul 2b mit den Abdeckungen 5 und 4 bleiben erhalten.

Die Wohnungsstation kann auch mehr als drei UP-Dosen 1 umfassen, wenn der Rahmen 3 entsprechend weitere Ausnehmungen aufweist. Die weiteren Ausnehmungen werden mit weiteren Abdeckungen abgedeckt, die an die weiteren Funktionen oder Ausbaugrößen der Tür-Kommunikationsanlage angepasst werden können.

In Fig. 2 ist der grundsätzliche Aufbau der Moduleinheiten dargestellt. Ein Gehäuseunterteil 13 nimmt eine Leiterplatte 8 auf, die die für die Modulfunktion erforderlichen Bauelemente 10 trägt. Im Boden des Gehäuseunterteils 13 ist ein Durchbruch eingebracht, durch den die Verbindungsleitungen 7 eingeführt sind. Mit 9 ist auf der Leiterplatte 8 die Modul-Schnittstelle bezeichnet, an der die weiterführenden Leitungen zur zugeordneten Abdeckung 4, 5 oder 6 abgehen. Diese Leitungen passieren einen Durchbruch des Gehäuseoberteils 11. Eine rahmenartige Tragplatte 12 trägt die Moduleinheit und dient zur Festlegung in der UP-Dose 1. Das Steuerungsmodul 2a, das Verstärkermodul 2b und das Videomodul 2c können wie weitere Moduleinheiten diesen Grundaufbau aufweisen. Dadurch wird der Aufbau der Wohnungsstation weiter vereinfacht.

## Patentansprüche

1. Wohnungsstation für eine Tür-Kommunikationsanlage mit einem UP-Gehäuse, in das Funktionseinheiten eingesetzt und mittels eines Rahmens mit Abdeckungen abgedeckt sind,
wobei das UP-Gehäuse aus mindestens zwei aneinanderreihbaren UP-Dosen oder einer Doppeldose zusammengesetzt ist,
wobei in die eine UP-Dose (1) ein Steuerungsmodul (2a) mit einem Rechner sowie einem Steuerbefehlempfänger und einem Steuerbefehlsender und in die andere UP-Dose (1) ein Verstärkermodul (2b) eingesetzt sind,
wobei das Steuerungsmodul (2a) und das Verstärkermodul (2b) mittels eines Rahmens (3) abgedeckt sind,
wobei in die dem Steuerungsmodul (2a) zugeordnete Ausnehmung des Rahmens (3) eine Abdeckung (5) mit Bedienungs- und/oder Anzeigeelementen eingesetzt ist und in die dem Verstärkermodul zugeordnete Ausnehmung des Rahmens (3) eine Abdeckung (4) mit Lautsprecher und/oder Mikrofon eingesetzt ist,
wobei das Steuerungsmodul (2a) und das Verstärkermodul (2b) einen dosenförmigen Gehäuseunterteil (13), und einen das Gehäuseunterteil (13) abdeckenden Gehäuseoberteil (11) aufweist,
wobei in das Gehäuseunterteil (13) eine Leiterplatte (8) mit *zum zugeordneten Modul verbundenen* Bauelementen (10) eingesetzt ist und
wobei die Leiterplatte (8) mit einer Modul-Schnittstelle (9) versehen ist, an der die weiterführenden Leitungen *zur zugeordneten Abdeckung (4, 5 oder 6)* abgehen und die durch das Gehäuseoberteil (11) hindurch mit der im Rahmen (3) eingesetzten Abdeckung (4, 5 oder 6) verbunden ist.

2. Wohnungsstation nach Anspruch 1,
**dadurch gekennzeichnet,**
**dass** das Steuerungsmodul (2a) und/oder das Verstärkermodul (2b) eine das zusammengesetzte Steuerungs- und/oder Verstärkungsmodul (2a,2b) tragende Trägerplatte (12) aufweist.

3. Wohnungsstation nach Anspruch 2,
**dadurch gekennzeichnet,**
**dass** die Modulschnittstelle (9) der Leiterplatte (8) durch die Tragplatte (12) hindurch mit der Abdeckung (4,5 oder 6) verbunden ist.

4. Wohnungsstation nach einem der Ansprüche 1 bis 3,
**dadurch gekennzeichnet,**
**dass** das UP-Gehäuse auf drei UP-Dosen (1) erweitert ist,
**dass** in die dritte UP-Dose (1) ein Videosteuermodul (2c) eingesetzt ist,
**dass** der Rahmen ein Dreifachrahmen (3) ist und
**dass** die dem Videosteuermodul (2c) zugeordnete Ausnehmung mittels einer Abdeckung (6) mit Bildschirm abgedeckt ist.

5. Wohnungsstation nach einem der Ansprüche 1 bis 4,
**dadurch gekennzeichnet,**
**dass** das Steuerungsmodul (2a), das Verstärkermodul (2b) und das Video-steuermodul (2c) mittels Verbindungsleitungen (7) elektrisch miteinander verbunden sind.

6. Wohnungsstation nach einem der Ansprüche 1 bis 5,
**dadurch gekennzeichnet,**
**dass** die UP-Dosen (1) topfartig ausgebildet und mittels angeformter Steckhülsen aneinanderreihbar sind.

7. Wohnungsstation nach Anspruch 6,
**dadurch gekennzeichnet,**
**dass** die UP-Dose (1) zwei diagonal angeformte komplementäre, ineinandersteckbare Steckhülsen aufweist.

8. Wohnungsstation nach einem der Ansprüche 1 bis 7,
**dadurch gekennzeichnet,**
**dass** das Video-Steuermodul (2c) aus einem dosenförmigen Gehäuseunterteil (13), einem das Gehäuseunterteil (13) abdeckenden Gehäuseoberteil (11) und einer das zusammengesetzte Videosteuermodul (2c) tragenden Trägerplatte (12) besteht.

9. Wohnungsstation nach einem der Ansprüche 1 bis 8,
**dadurch gekennzeichnet,**
**dass** das Gehäuseunterteil (13) im Boden mit einem Durchbruch zur Einführung der Verbindungsleitungen (7) versehen ist und
**dass** das Gehäuseoberteil (11) mit einem Durchbruch versehen ist, durch den die die Modul-Schnittstelle (9) mit der zugeordneten Abdeckung (4, 5 oder 6) im Doppel- oder Dreifachrahmen (3) verbindenden Leitungen geführt sind.

10. Wohnungsstation nach einem der Ansprüche 1 bis 9,
**dadurch gekennzeichnet**
**dass** sie mit zusätzlichen UP-Dosen (1) und entsprechend erweitertem Rahmen (3) erweiterbar ist, wobei zumindest die weiteren Ausnehmungen des Rahmens (3) mittels angepasster Abdeckungen verschlossen sind.

## Claims

1. Home stations for a door communication system with a flush-mounted housing into which functional units are inserted and covered by means of a frame with covers,
with the flush-mounted housing comprising at least two flush-mounted boxes, which can be attached to one another, or a twin box,
with a controller module (2a) with a computer and also a control command receiver and a control command transmitter being inserted into one flush-mounted box (1), and an amplifier module (2b) being inserted into the other flush-mounted box (1),
with the controller module (2a) and the amplifier module (2b) being covered by means of a frame (3),
with a cover (5) with operator control and/or display elements being inserted into that recess in the frame (3) which is associated with the controller module (2a), and a cover (4) with a loudspeaker and/or microphone being inserted into that recess in the frame (3) which is associated with the amplifier module,
with the controller module (2a) and the amplifier module (2b) having a box-like housing lower part (13) and a housing upper part (11) which covers the housing lower part (13),
with a printed circuit board (8) with components (10) which are connected to the associated module being inserted into the housing lower part (13), and
with the printed circuit board (8) being provided with a module interface (9) at which the continuing lines exit to the associated cover (4, 5 or 6) and which is connected to the cover (4, 5, or 6) which is inserted in the frame (3) through the housing upper part (11).

2. Home station according to Claim 1,
**characterized**
**in that** the controller module (2a) and/or the amplifier module (2b) have/has a carrier plate (12) which carries the assembled controller and/or amplification module (2a, 2b).

3. Home station according to Claim 2,
**characterized**
**in that** the module interface (9) of the printed circuit board (8) is connected to the cover (4, 5 or 6) through the carrying plate (12).

4. Home station according to one of Claims 1 to 3,
**characterized**
**in that** the flush-mounted housing is extended to three flush-mounted boxes (1),
**in that** a video control module (2c) is inserted into the third flush-mounted box (1),
**in that** the frame is a triple frame (3), and
**in that** the recess which is associated with the video control module (2c) is covered by means of a cover (6) with a screen.

5. Home station according to one of Claims 1 to 4,
**characterized**
**in that** the controller module (2a), the amplifier module (2b) and the video control module (2c) are electrically connected to one another by means of connection lines (7).

6. Home station according to one of Claims 1 to 5,
**characterized**
**in that** the flush-mounted boxes (1) are formed in a pot-like fashion and can be attached to one another by means of integrally formed plug-in sleeves.

7. Home station according to Claim 6,
**characterized**
**in that** the flush-mounted box (1) has two diagonally integrally formed, complementary plug-in sleeves which can be plugged one in the other.

8. Home station according to one of Claims 1 to 7,
**characterized**
**in that** the video control module (2c) comprises a box-like housing lower part (13), a housing upper part (11) which covers the housing lower part (13), and a carrier plate (12) which carries the assembled video control module (2c).

9. Home station according to one of Claims 1 to 8,
**characterized**
**in that** the base of the housing lower part (13) is provided with an aperture for inserting the connection lines (7), and
**in that** the housing upper part (11) is provided with an aperture through which lines which connect the module interface (9) to the associated cover (4, 5 or 6) in the twin or triple frame (3) are conducted.

10. Home station according to one of Claims 1 to 9,
**characterized**
**in that** it can be extended by additional flush-mounted boxes (1) and a correspondingly extended frame (3), with at least the further recesses in the frame (3) being closed by means of adapted covers.

## Revendications

1. Station de logement pour un équipement de communication de porte comprenant un boîtier à montage encastré dans lequel des unités fonctionnelles sont logées et recouvertes par un cadre muni de capots, le boîtier à montage encastré étant constitué d'au moins deux boîtes à montage encastré pouvant être alignées l'une à côté de l'autre ou d'une double boîte, un module de commande (2a) comprenant un processeur ainsi qu'un récepteur d'instructions de commande et un émetteur d'instructions de commande étant logé dans une boîte à montage encastré (1) et un module amplificateur (2b) dans l'autre boîte à montage encastré (1), le module de commande (2a) et le module amplificateur (2b) étant recouverts au moyen d'un cadre (3), un capot (5) muni d'éléments de commande et/ou d'indication étant logé dans le creux du cadre (3) associé au module de commande (2a) et un capot (4) muni d'un haut-parleur et/ou d'un microphone étant logé dans le creux du cadre (3) associé au module amplificateur, le module de commande (2a) et le module amplificateur (2b) présentant une partie inférieure de boîtier (13) en forme de boîte et une partie supérieure de boîtier (11) qui recouvre la partie inférieure de boîtier (13), un circuit imprimé (8) comprenant les composants (10) reliés avec le module associé étant logé dans la partie inférieure de boîtier (13) et le circuit imprimé (8) étant muni d'une interface de module (9) de laquelle partent les lignes de prolongation vers le capot (4, 5, ou 6) associé et qui est reliée avec le capot (4, 5 ou 6) logé dans le cadre (3) à travers la partie supérieure de boîtier (11).

2. Station de logement selon la revendication 1, **caractérisée en ce que** le module de commande (2a) et/ou le module amplificateur (2b) présentent une plaque porteuse (12) qui supporte le module de commande et/ou amplificateur assemblé (2a, 2b).

3. Station de logement selon la revendication 2, **caractérisée en ce que** l'interface de module (9) du circuit imprimé (8) est reliée avec le capot (4, 5 ou 6) à travers la plaque porteuse (12).

4. Station de logement selon l'une des revendications 1 à 3, **caractérisée en ce que** le boîtier à montage encastré est étendu à trois boîtes à montage encastré (1), qu'un module de commande vidéo (2c) est logé dans la troisième boîte à montage encastré (1), que le cadre est un cadre à trois compartiments (3) et que le creux associé au module de commande vidéo (2c) est recouvert par un capot (6) muni d'un écran.

5. Station de logement selon l'une des revendications 1 à 4, **caractérisée en ce que** le module de commande (2a), le module amplificateur (2b) et le module de commande vidéo (2c) sont reliés électriquement entre eux au moyen de lignes de liaison (7).

6. Station de logement selon l'une des revendications 1 à 5, **caractérisée en ce que** les boîtes à montage encastré (1) sont réalisées en forme de creuset et peuvent être alignées les unes à côte des autres au moyen de douilles à enficher façonnées.

7. Station de logement selon la revendication 6, **caractérisée en ce que** la boîte à montage encastré (1) présente deux douilles à enficher complémentaires façonnées en diagonal pouvant être enfichées l'une dans l'autre.

8. Station de logement selon l'une des revendications 1 à 7, **caractérisée en ce que** le module de commande vidéo (2c) se compose d'une partie inférieure de boîtier (13) en forme de boîte, d'une partie supérieure de boîtier (11) qui recouvre la partie inférieure de boîtier (13) et d'une plaque porteuse (12) qui supporte le module de commande vidéo (2c) assemblé.

9. Station de logement selon l'une des revendications 1 à 8, **caractérisée en ce que** la partie inférieure de boîtier (13) est munie dans le fond d'une traversée pour introduire des lignes de liaison (7) et que la partie supérieure de boîtier (11) est munie d'une traversée à travers laquelle sont guidées les lignes qui relient l'interface de module (9) avec le capot (4, 5, ou 6) correspondant dans le cadre à double ou à triple compartiment (3)

10. Station de logement selon l'une des revendications 1 à 9, **caractérisée en ce qu'**elle peut être étendue avec des boîtes à montage encastré (1) supplémentaires et d'un cadre (3) étendu en conséquence, au moins les creux supplémentaires du cadre (3) étant fermés au moyen de capots adaptés.
